# EUROPEAN PATENT SPECIFICATION

(11) **EP 3 132 154 B1**
(45) Date of publication and mention of the grant of the patent: **28.02.2018**
(21) Application number: 15724047.4
(22) Date of filing: 14.04.2015
(51) Int. Cl.: F16D 65/12, F16D 69/02

(54) **BRAKING MEMBER FOR BRAKE SYSTEM AND METHOD FOR MAKING IT**
BREMSKÖRPER FÜR EIN BREMSSYSTEM UND VERFAHREN ZUR HERSTELLUNG DAVON
ÉLÉMENT DE FREINAGE POUR SYSTÈME DE FREINAGE, ET PROCÉDÉ DE FABRICATION DE CET ÉLÉMENT

(30) Priority: 15.04.2014 IT VR20140098
(43) Date of publication of application: 22.02.2017
(73) Proprietor: Ferdiam S.r.l., 37023 Grezzana (VR) (IT)
(72) Inventor: FERRARI, Alberto, I-37023 Grezzana (Verona) (IT); FERRARI, Isidoro, I-37023 Grezzana (Verona) (IT)
(74) Representative: Marchi, Paolo
(86) International application number: PCT/IB2015/052698
(87) International publication number: WO 2015/159209

(56) References cited:
- EP-A1- 2 402 625
- WO-A1-98/09092
- WO-A1-2010/015897

## Description

This disclosure relates in general to the sector of brake systems, in particular for vehicles. Specifically, this disclosure relates to a braking member for a brake system, the brake system being of the type in which the braking member frictionally operates in conjunction with another component of the brake system to produce a braking action due to the friction force developed between the braking member and the other component when the brake system is operated.

An example of such a brake system is a disc brake for a vehicle: a disc rotating together with a wheel of the vehicle is designed to frictionally operate in conjunction with at least one wear pad mounted on a brake shoe fixed to the body of the vehicle. In a disc brake system, the main component is the disc, whilst the wear pads are made so that they adapt and operate synergistically according to the characteristics and the composition of the disc.

The function of the disc is basically to degrade the kinetic energy of the vehicle into thermal energy. Therefore, one of its fundamental characteristics is the ability to dissipate heat. To do this in the best possible way and over a lengthy operating lifetime, mechanical resistance, resistance to wear and limited size variation caused by thermal expansion are also important. The lightness of the disc is important for energy efficiency.

In many applications, the heat outputs generated by braking are quite high and natural convection is not sufficient to adequately cool the disc. In such cases, since it is not possible to increase the radius of the disc because of the reduced space available, ventilated discs, also known as "self-ventilating" discs, are used.

A ventilated disc is composed of two annular plates connected to one another by interposed elements, which leave radial compartments extending from the inner part to the outer part of the disc. The total thickness of the disc is several centimetres. The centrifugal air flow created in the radial compartments gives ventilated discs a greater capacity for cooling and for heat dissipation than simple, unventilated discs. However, this advantage comes with the disadvantages of increasing the construction complexity, increasing the disc weight and reducing the energy efficiency due to the centrifugal ventilation effect, which is always active even when the disc does not need cooling, that is to say, even when there is no braking in progress.

At present, the materials used for brake discs are: cast iron, steel, Al/SiC composites, carbon-ceramic, carbon.

Each of these materials has advantages and disadvantages.

Al/SiC discs are not widely used due to the low melting temperature of aluminium, which risks causing rapid deterioration of the disc if it reaches high temperatures. Therefore, this type is only usable for ventilated discs and with medium/low energy dissipation requirements.

Carbon-ceramic discs are light and withstand use over a considerable number of kilometres. They have good performance in terms of power and braking modulation, as well as operating lifetime. However, manufacturing times and costs are very high. Therefore, their use is limited only to a narrow market niche, such as high-end cars and high speed trains.

Carbon discs only operate efficiently at high temperatures. They also have very high manufacturing costs, therefore they are only used in brake units for aircraft and for car and motorcycle competitions.

Cast iron discs or steel discs are currently the best technical - economic compromise. But this type has several problems:
- In terms of performance, the disc suffers considerable wear during its working life. That means that the disc must be oversized in order to guarantee that, at the end of its planned life, the disc is still thick enough to guarantee safe braking. The oversized disc has a high mass, resulting in increased consumption by the vehicle on which it is mounted.
- From an environmental viewpoint, braking generates micrometric particulate matter due to wear of discs and pads. With regard to this, recent studies have shown that, for the most recent cars, the particulate matter caused by brake system wear is substantially comparable (or even greater) with particulate matter from combustion emitted by the engine. In fact, technical improvements introduced in engines, in exhaust systems and in fuels have greatly reduced emissions of particulate matter from combustion, whilst brake systems have not seen such widespread and significant technical improvements to reduce their wear. Therefore, the environmental impact of the current brake systems is quite high in terms of pollution from fine dusts.
- With regard to maintenance, the considerable wear of the disk and pads requires frequent checks and if necessary disc substitution, even two or more times during the vehicle lifetime.

EP 2 402 625 A1 discloses a compound brake disc and method for its manufacture. The disk has a friction ring arranged coaxial to a brake pot. The brake pot includes radial form-fit elements, e.g. projections, designed at a cylindrical circumferential surface. The form-fit elements are connected with the friction ring in form-fit manner. The friction ring is arranged at the circumferential surface in spray compacted manner. The friction ring is made of metal, metal alloy, metal matrix-composite alloy i.e. metal matrix-composite aluminum alloy, with hard materials.

The present disclosure starts from the technical problem of providing a brake system that overcomes the above-mentioned disadvantages of the prior art and/or that provides further advantages.

That is achieved by supplying a braking member for a brake system according to independent claim 1. The technical problem is also solved by a brake system according to claim 17. This disclosure also relates to a method for making a braking member according to claim 19.

Particular embodiments of the subject matter of this disclosure are defined in the corresponding dependent claims.

This disclosure derives from the idea of the inventors that it is possible to use in the brake systems sector a composite material comprising diamond particles and a binder. Even more particularly, the inventors of this disclosure began with the idea of looking at the sector of natural or synthetic diamond particles, which is a distant sector, unusual relative to that of vehicles and vehicle brake systems, to find a material suitable for brake systems. Said diamond sector is all the more distant and unusual relative to the sector of vehicles and brake systems because of the possible cost of diamond particles, which would not lead experts in the brake systems field to consider using diamond. The possibility of using natural or synthetic diamond particles even in the brake systems sector, in particular the use of particles with a particle size measurement of less than 1000 microns, is therefore a further aspect identified by the inventors of this disclosure.

Therefore, an idea for a solution which forms the basis of this disclosure is to make a braking member (in particular, a friction portion of said braking member and/or a surface of said friction portion) using a composite material comprising diamond particles and a binder.

Specifically, the braking member comprises at least one friction portion having a surface intended to be put into contact with a component of the brake system to produce a braking action due to a friction force between said surface and said component. The composite material is used to make at least said surface and/or said friction portion.

That is useful for providing a braking member with a high capacity for dissipating the heat generated by braking. In fact, diamond has a high thermal conductivity coefficient, which is between 1000 and 2600 W·m⁻¹·K⁻¹, whilst the materials currently used for brake systems have much lower values. For example, the thermal conductivity coefficient of aluminium is 247 W·m⁻¹·K⁻¹, that of silicon carbide SiC is between 70 and 490 W·m⁻¹·K⁻¹, that of grey cast iron is 42 W·m⁻¹·K⁻¹, that of 1025 steel is 50 W·m⁻¹·K⁻¹.

Thanks to the high capacity for dissipating heat, a braking member according to this disclosure can be made with suitable dimensions, without having to oversize it. Consequently, the overall weight of the brake system is lower and its energy efficiency is higher. Moreover, diamond has a specific weight that is less than half the specific weight of cast iron and of steel. That further helps to reduce the weight of the brake system.

For example, considering the specific application to a disc brake, the brake disc or the brake pad or both can be made according to this disclosure, that is to say, using a composite material comprising diamond particles and a binder.

In particular, at least in some applications, it is possible to use a simple brake disc, where in contrast in the prior art it was necessary to use a ventilated brake disc. In fact, heat dissipation for a simple disc made of the composite material may be sufficient for adequate disc cooling and may be equivalent to the heat dissipation of a prior art ventilated disc.

Compared with the other materials currently used, diamond has a very high melting point and therefore it is not damaged by the high temperatures that may be generated during braking. Therefore, it makes an important contribution to improving the mechanical resistance of the braking member during use.

Furthermore, diamond has a thermal expansion coefficient that is the lowest of all of the materials mentioned (approximately one tenth that of steel, cast iron and aluminium), has a very high modulus of elasticity (between five and ten times that of the other materials currently used) and is by far the hardest material (with a value of 10 on the Mohs scale). That is useful for ensuring that the braking member does not deform and does not undergo significant size variations either due to the heat developed during braking or because of the friction force generated. In other words, the braking member has greater size stability and mechanical resistance than those of braking members made of other materials.

Therefore, the use of a composite material comprising diamond particles allows a brake system to be obtained whose performance is significantly improved compared with the prior art.

Moreover, thanks to the hardness of diamond, the wear of a braking member according to this disclosure is extremely limited. That is useful for extending the working life of the braking member, for reducing the frequency of checks and substitutions, if necessary (the braking member may even have a working life longer than the working life of the vehicle, thereby eliminating the need to substitute it) and for reducing the ecological and environmental impact thanks to the reduced production of micrometric particulate matter. In particular, considering the latter aspect, the use of braking members according to this disclosure would allow a considerable reduction in emissions of fine dusts linked to vehicle traffic, providing a significant reduction that is no longer achievable by further improving engines and exhaust systems.

These advantages are particularly accentuated if, for example, a brake disc and the respective pad are both made with a friction portion made of said composite material. In particular, the composite material comprises a binder matrix (the binder may be a metal material or an organic binder) in which the diamond particles are embedded and incorporated. Even more particularly, the composite material has a metal binder matrix and therefore is of the type known as "metal matrix composite" (MMC).

For example, the diamond particles have a diameter (or, more generally, a size) which is between 1 nm and 1 mm. In particular, the diameter or size is between 10 µm and 600 µm. Even more particularly, the diameter or size is between 30 µm and 300 µm.

For example, the diamond particles occupy a fraction of the volume of the composite material that is between 10% and 50%. In particular, that volume fraction is between 15% and 40%. In a specific embodiment which has proved to be a good technical - economic compromise, said volume fraction is 20%.

In any case, the quantity (that is to say, the volumetric fraction) and the particle size measurement of the diamond particles may be selected with the most suitable values for obtaining specific values for the friction coefficient and resistance to abrasion. In other words, during production it is possible to modulate the composition of the composite material and the particle size distribution so as to adapt the braking member to the requirements of the brake system, to the specific aspects of use (of example, longer lasting for ordinary cars, improved performance for competition cars) and to the price/performance ratio best suited to the required application.

Specifically, the metal binder used is selected from aluminium, copper, titanium, magnesium, cobalt, iron, cast iron or steel. Alternatively, the metal binder may be an alloy of two or more of these materials. Other materials are possible alternatives. The diamond particles may be natural diamond, ground and sieved in the appropriate particle size measurements, or synthetic diamond, produced using known technologies (for example, HPHT, CVD, detonation of explosives, ultrasonic cavitation).

A braking member according to this disclosure can be made with limited production times and costs. As a particular example, they are noticeably reduced compared with those for carbon-ceramic discs.

For example, the friction portion of the braking member can be made by sintering or using a three-dimensional printing technique. In one particular embodiment, the friction portion is made by direct metal laser sintering, that is to say, using a three-dimensional printing technique generally known as "direct metal laser sintering" (DMLS).

Other 3D printing techniques are possible, such as that generally known as Electron Beam Melting, with the acronym EBM.

To increase the advantages obtained from the heat conduction physical properties of diamond, as well as to improve the adhesion with the metal matrix, the diamond particles may be coated or granulated with a coating substance before mixing the diamond particles and the binder. In particular, the coating substance is of the ceramic type, such as silicon carbide (SiC) or a metal compatible with the material of the metal matrix, such as chromium, titanium, silver, nickel or copper. In practice, the coating substance acts as a bridge between the diamond particles and the binder. For example, chromium is particularly effective because it chemically bonds with the diamond particles and deeply blends with the metal binder.

In one production method, the friction portion is made entirely of diamond/binder composite material.

In another particular embodiment, the friction portion is an integral part of the braking member, that is to say, it is in one piece with a remaining portion of the braking member, and the entire braking member is made of said composite material. In another particular embodiment, the friction portion is composed of one or more elements made of diamond/binder composite material. Said one or more elements made of composite material are manufactured individually and then mounted on a support to obtain the braking member. In other words, the braking member comprises a support, for example made of metal, and one or more elements made of composite material which are constrained to the support. For example, in the case of a brake disc, that embodiment is useful for simplifying production, for limiting the use of composite material (which is more expensive) to where it is strictly necessary, if necessary for allowing substitution only of the worn friction portion without the need to substitute the entire brake disc.

In another embodiment, the diamond/binder composite material is only used in a surface layer of the friction portion or of the braking member, whilst the rest of the friction portion or of the braking member is made of binder material without diamond particles. Said surface layer may even be a single-grain layer of diamond. That embodiment is useful for further limiting the use of composite material (which is more expensive) to where it is strictly necessary, that is to say, on the surface of the friction portion which will be put into contact with the other component of the brake system.

For example, in that embodiment with a single-grain surface layer, the diamond particles have a diameter (or, more generally, a size) that is between 200 µm and 1200 µm. In particular, the diameter or size is between 400 µm and 800 µm.

For example, the diamond particles occupy a fraction of the friction surface that is between 20% and 80%. In particular, that surface fraction is between 40% and 60%. Further advantages, characteristics and methods for use of the subject matter of this disclosure are apparent in the following detailed description of non-limiting embodiments thereof, presented by way of example. In any case, it is evident how each embodiment of the subject matter of this disclosure may present one or more of the advantages listed above. In any case, each embodiment does not have to simultaneously present all of the advantages listed. Reference will be made to the accompanying drawings, in which:
- Figure 1 is a front view, partly in section and interrupted, of an embodiment of a disc brake system comprising braking members according to this disclosure;
- Figure 2 is an axonometric view of a first embodiment of a brake disc according to this disclosure;
- Figure 3 is an enlarged view of a detail III from Figure 2, said detail being a portion of the surface of the brake disc;
- Figure 4 is an axonometric view of a second embodiment of a brake disc according to this disclosure;
- Figure 5 is an axonometric view of the brake disc of Figure 4, with the parts detached;
- Figure 6 is a cross-sectional view, along the cross-section line VI - VI, of the brake disc of Figure 4;
- Figure 7 is a perspective view of a third embodiment of a brake disc according to this disclosure, with one part detached;
- Figure 8 is a perspective view of a brake pad according to this disclosure;
- Figure 9 is an axonometric view of a fourth embodiment of a brake disc according to this disclosure;
- Figure 10 is a side view in cross-section of the brake disc of Figure 9;
- Figure 11 is an enlarged view of a detail XI from Figure 9;
- Figure 12 is an enlarged view of a detail XII from Figure 10;
- Figure 13 is a side view of another embodiment of a brake disc;
- Figure 14 is a side view in cross-section of another embodiment of a brake disc;
- Figure 15 is a perspective view, partly in section, of a piece of a part of the brake disc of Figure 14;
- Figure 16 illustrates a sintering mould inserted in a mould holder, to be used for making a braking member according to this disclosure, in particular for making a quarter of a friction portion of a brake disc;
- Figure 17 is a temperature and pressure time chart for a sintering cycle for making a braking member according to this disclosure;
- Figure 18 is a side view, schematic and in cross-section, of a sintering mould just before the start of sintering;
- Figure 19 is a perspective view of a screen or template to be used in a production method according to this disclosure;
- Figure 20 is a side view in cross-section of two parts, each obtained using the mould of Figure 18, the parts being to be joined together in order to make a brake disc according to this disclosure;
- Figure 21 shows an alternative use of the mould of Figure 18;
- Figure 22 is a side view in cross-section of a part obtained using the mould of Figure 21.

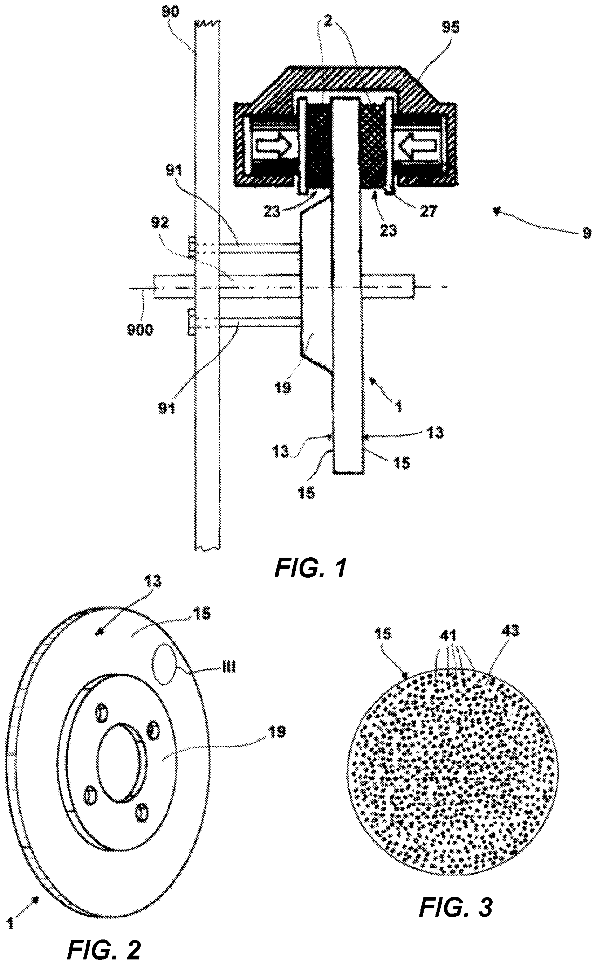

With reference to the accompanying drawings, Figure 1 shows an embodiment of a brake system 9, in particular for a vehicle such as a car, a lorry, a motorcycle, a bicycle, a train.

The brake system 9 comprises a first braking member or first component 1 which rotates together with a wheel 90 of the vehicle. The first braking member 1 and the wheel 90 are mounted on the same axle 92 and rotate together about an axis of rotation 900. In particular, the first braking member 1 is a brake disc and it is fixed to the wheel 90 by means of bolts 91.

The brake system 9 also comprises a brake shoe 95 which is fixed to the body of the vehicle or to a part of it (for example to a fork, in the case of a motorcycle) and receives a peripheral region of the first braking member 1.

When the vehicle is being driven, the wheel 90 and the first braking member 1 rotate about the axis of rotation 900 and therefore move relative to the brake shoe 95.

The brake shoe 95 comprises at least one second braking member or second component 2, which is intended to operate in conjunction with the first braking member 1 to produce a braking action. In particular, the second braking member or second component 2 is a brake pad.

When the vehicle is being driven without braking, the second braking member 2 is not in contact with the first braking member 1 and therefore does not interfere with the rotation of the wheel 90.

When the brake system 9 is operated, the second braking member 2 is pushed against the first braking member 1, for example by means of a hydraulic or oil hydraulic command, to produce a braking action thanks to a friction force (in particular, a sliding friction force) between the first braking member 1 and the second braking member 2.

Both the first braking member or first component 1, and the second braking member or second component 2 each have at least one friction portion 13, 23 which has a surface 15, 25 intended to be put into contact (in particular, into pressing contact) with the surface of the friction portion of the other braking member or component during operation of the brake system 9. The friction force is produced between the surface 15 of the friction portion 13 of the first braking member 1 and the surface 25 of the friction portion 23 of the second braking member 2.

In the case of a brake disc 1, the friction portion 13 is an annular region on one side or face of the brake disc 1. The annular region passes inside the brake shoe 95 during the rotation about the axis 900 and makes contact with the brake pad 2 during braking. In practice, the friction portion 13 is circular ring-shaped. Basically, that circular ring shape corresponds to a disc with a hole at the centre. That is to say, a suitably sized washer shape.

In the embodiment of Figure 1, the brake system 9 comprises two opposite brake pads 2, which act on opposite faces of the brake disc 1. Therefore, the brake disc 1 comprises two circular ring-shaped friction portions 13, on opposite faces of the brake disc 1.

In the case of a brake pad 2, the friction portion 23 is substantially flat and directly facing the brake disc 1.

In a braking member 1, 2 according to this disclosure, the friction portion 13, 23 is made of composite material comprising diamond particles and a binder.

In one embodiment, only the friction portion 13 of the brake disc 1 is made of said composite material, whilst the brake pad 2 is of the known type.

In another embodiment, only the friction portion 23 of the brake pad 2 is made of said composite material, whilst the brake disc 1 is of the known type.

In yet another embodiment, referred to hereinafter, both the brake disc 1 and the brake pad 2 have a respective friction portion 13, 23 made of said composite material.

An enlarged view of the surface 15 of the friction portion 13 is shown in Figure 3, where the diamond particles 41 surrounded by the binder 43 can be seen. Specifically, the composite material comprises a solid matrix of binder 43 and diamond particles 41 embedded in the binder matrix.

In particular, the binder 43 is a metal material and therefore the composite material is a "metal matrix composite" (MMC). Depending on requirements and the specific application, the binder metal material may, for example, be aluminium, copper, titanium, magnesium, cobalt, iron, cast iron or steel. The binder metal material may be an alloy of two or more of said materials.

In an alternative embodiment, the binder is an organic binder, for example a phenolic resin, a cresylic resin or polyether-ether-ketone (known with the acronym PEEK).

The diamond particles 41 are granules having a substantially spherical shape or an irregular shape. Said granules have a diameter or a size which is between 1 nm and 1 mm. In particular the diameter or size is between 10 µm and 600 µm, even more particularly, the diameter or size is between 30 µm and 300 µm.

A first embodiment of a brake disc 1 according to this disclosure is shown in Figure 2. In this embodiment, the brake disc 1 is made entirely of diamond/binder composite material, even in regions which remain outside the brake shoe 95 and which are not intended to be put into contact with the brake pad 2. In other words, the diamond particles 41 are distributed in the entire mass of the brake disc 1. Therefore, the friction portion 13 is in one piece with a remaining portion of the brake disc 1. A flange 19 is fixed to the brake disc 1 to allow it to be connected to the wheel 90 by means of bolts 91.

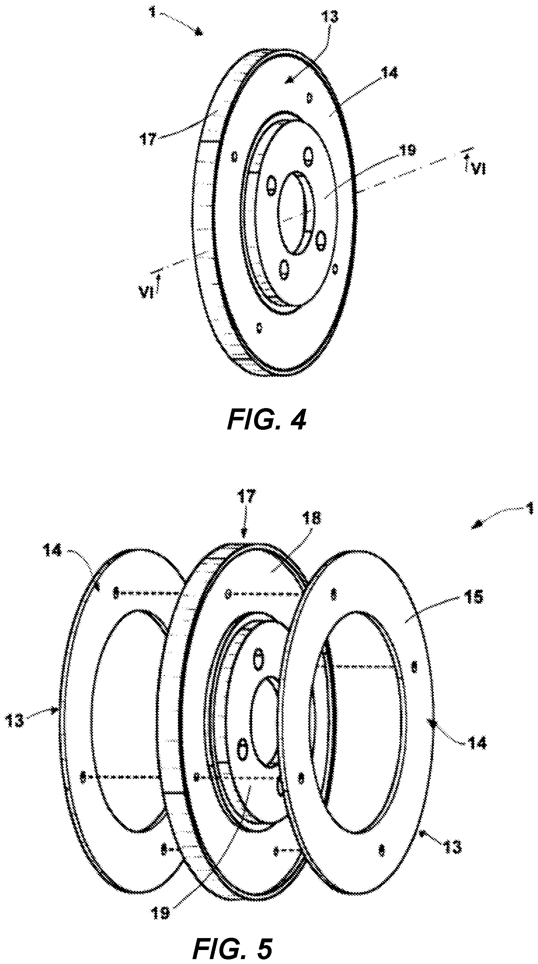

A second embodiment of a brake disc 1 according to this disclosure is shown in Figures 4 to 6. In this embodiment, the brake disc 1 comprises a disc-shaped support 17 and one or more elements 14 made of diamond/binder composite material which are mounted and fixed on the support 17. The friction portion 13 is composed of said one or more elements 14. The disc-shaped support 17 is, for example, made of metal or a metal alloy.

Therefore, in this embodiment the diamond particles 41 are only present in the outer friction bands, that is to say, in the region effectively intended to be put into contact with the brake pad 2. That allows a saving of composite material compared with the embodiment in Figure 2. The elements 14 are structurally separate from the support 17 and are manufactured separately from the support 17. The elements 14 are fixed to the support 17 (for example by means of screws) in such a way that they are stably constrained to and rotate together with the support 17. The thickness of the elements 14 may be more or less limited.

In the embodiment illustrated in Figures 4 to 6, each friction portion 13 consists of a single circular ring-shaped element 14.

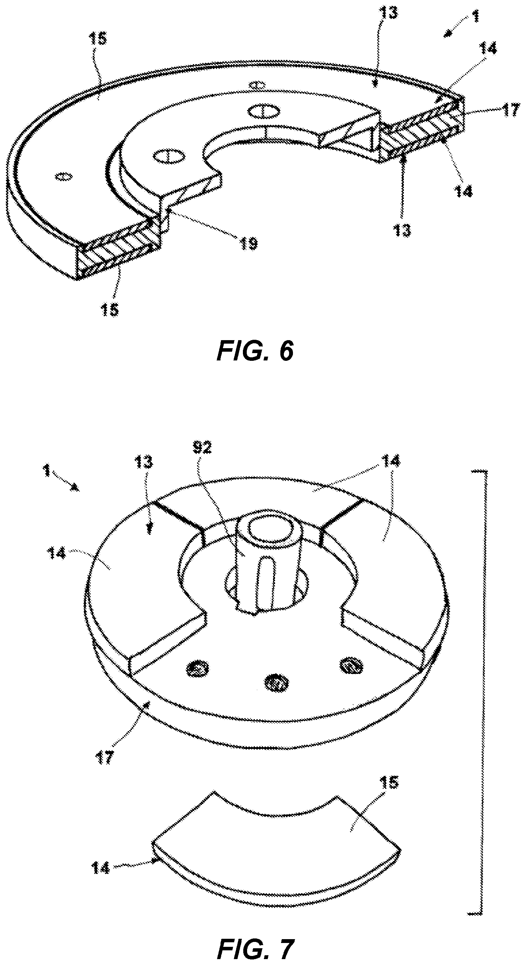

In an alternative embodiment shown in Figure 7, the friction portion 13 consists of a plurality of elements 14, for example of four elements 14 each having the shape of one quarter of a circular ring.

In particular, the disc-shaped support 17 comprises an annular seat 18, in which the one or more elements 14 composing the friction portion 13 are mounted. The connecting flange 19 is fixed to the disc-shaped support 17.

In the embodiment illustrated in Figures 4 to 6, the brake disc 1 comprises two friction portions 13 which are on opposite faces of the disc-shaped support 17. The disc 17 comprises two annular seats 18, one on each face, and each friction portion 13 is composed of one or more elements 14 made of composite material. As shown in Figure 6, the disc-shaped support 17 is at least partly enclosed between the friction portions 13, therefore between two of said elements 14 made of composite material.

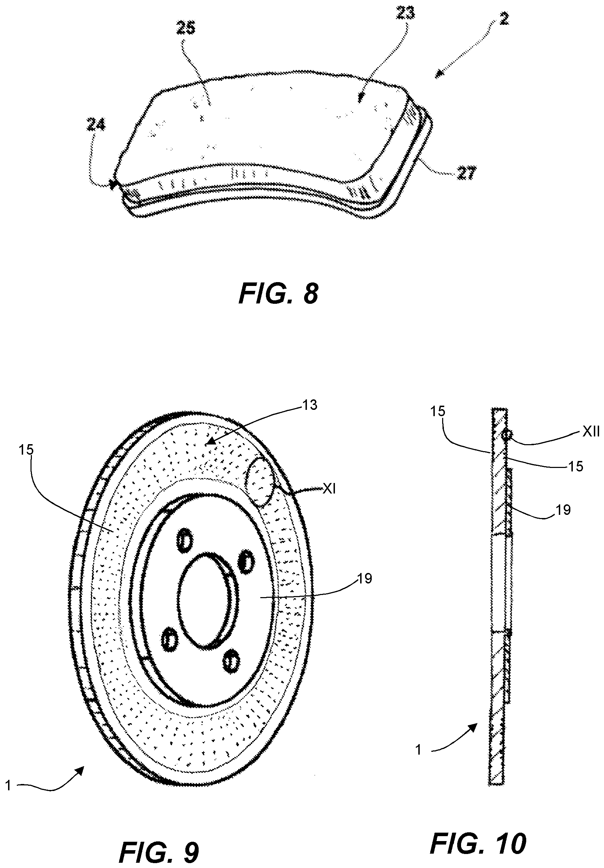

An embodiment of a brake pad 2 according to this disclosure is shown in Figure 8. The brake pad 2 comprises a support 27, for example made of metal, and an element 24 made of composite material which is mounted on a support 27 and acts as a friction portion 23.

In an alternative embodiment, the support 27 is not present and the brake pad 2 is made entirely of diamond/binder composite material, the friction portion 23 therefore being in one piece with a remaining portion of the brake pad 2.

In further alternative embodiments, the use of diamond/binder composite material is limited to the surface 15, 25 of the friction portion 13, 23. That is applicable both if the friction portion 13, 23 is in one piece with the rest of the brake disc 1 or of the brake pad 2, or if the friction portion 13, 23 is an element 14, 24 to be mounted on a support 17, 27.

In other words, the friction portion 13, 23 has a surface layer (even a single-grain layer) which is made of composite material, whilst the rest of the friction portion 13, 23 is made of another material, for example it is made only of binder material.

The possibility of modulating the quantity and the particle size measurement of the diamond particles 41, as well as of varying the type of binder 43, makes it possible to use the subject matter of this disclosure in various sectors (automotive, rail, aviation, etc.) and for different price/performance requirements (ordinary cars, sports cars, etc.).

The following metal matrix and diamond particle combinations are indicated by way of non-limiting examples:
- Copper/Diamond: tests revealed that this is the composite material with the best performance of all the composite materials assessed. It has the best balance of mechanical properties, thermal conduction and melting temperature. The combination of copper and diamond improves the already excellent thermal conduction properties. That means that there is no need to make the disc with the self-ventilating system and considerably reduces the construction complexity. Resistance to abrasion is such that the brake system can be used for the entire working lifetime of the vehicle. Moreover, diamond has a specific weight approximately 2.5 times lower than copper, therefore the weight of the composite is reduced, improving performance and limiting consumption.
- Aluminium/Diamond: favourably applied where weight is important (such as on motorcycles and electric cars) and at the same time the kinetic energy to be dissipated is limited, as in the case of light vehicles and/or vehicles which reach moderate speeds.
- Cast iron/Diamond or Steel/Diamond: favourably applied where a reduced production cost is required. The quantity of diamond in the composite could be limited to that strictly necessary in order to ensure that the lifetime of the disc coincides with the forecast working life of the vehicle. That can be achieved with a limited cost increase compared with cast iron or steel discs.
- Titanium: thanks to its excellent lightness and strength, titanium could be used as a structural support for two lateral friction bands made of copper/diamond or aluminium/diamond, that is to say as the support 17 for elements 14 made of copper/diamond or aluminium/diamond (see Figures 4 to 6). The use of titanium in a titanium/diamond composite material for the friction portion would be advantageous due to the high melting point of titanium, but the low thermal conductivity of titanium could make it an unfavourable choice. Considering that, the titanium/diamond composite could advantageously be used where braking is not frequently repeated, for example for a train emergency brake.

As already indicated above and shown in Figures 9 to 12, in one embodiment the braking member comprises a surface layer of composite material which is a single-grain layer. In practice, the composite material of which the surface layer (therefore the surface 15 of the friction portion) is composed comprises the binder 43 and a single layer of diamond particles 41. Since the rest of the body of the friction portion may be made of metal (or another material) without diamond particles, that embodiment is useful for limiting the quantity of diamond needed as far as possible. In that surface layer, the diamond particles 41 occupy a fraction of the surface that is between 20% and 80%. More particularly the fraction of the surface occupied by the diamond particles is between 40% and 60%. The rest of the surface is occupied by the binder material, which is located between the diamond particles 41.

For example, for the single-grain composite material, the diamond particles 41 have a diameter or size that is between 200 µm and 1200 µm, in particular the diameter or size is between 400 µm and 800 µm.

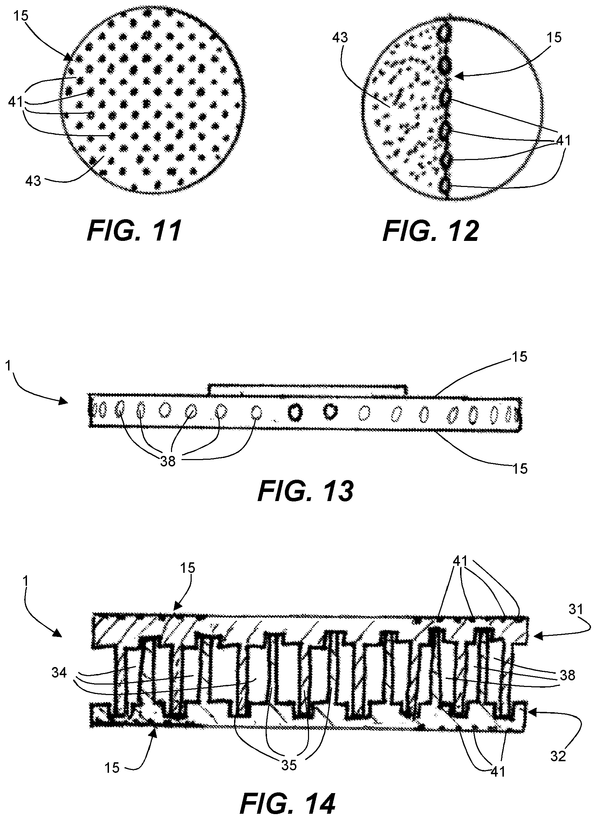

In one particular embodiment, the diamond particles 41 of the single layer are positioned according to a regular grid in which the diamond particles 41 are spaced from one another and the binder 43 is interposed between the diamond particles 41 (Figure 11). In practice, the friction surface 15 shows diamond particles 41 distributed in a regular fashion, for example in a grid with square mesh or triangular mesh. Compared with a random distribution, this is useful for ensuring substantial uniformity of the properties of the friction surface 15 during use. Moreover, since the diamond particles 41 do not touch each other, the contact surface of each particle 41 with the binder 43 is maximised. This is useful for ensuring that the diamond particles 41 are incorporated in the composite material in the most stable way possible, avoiding the possibility that they may be removed during use because of a concentration of stresses.

Said embodiments with a surface layer of single-grain composite material are particularly advantageous for making a braking member which is a brake disc 1, as shown for example in Figures 9 to 12. For such a brake disc, it was found that good results are achieved by using aluminium as the binder material.

In particular, the brake disc 1 comprises two circular ring-shaped friction surfaces 15, on opposite faces of the disc 1. Such friction surfaces 15, one of which is shown dotted in Figure 9, are affected by the action of the brake pads 2 during use.

Each of said two friction surfaces 15 is made of composite material with a single layer of diamond particles 41. The rest of the brake disc is made of material without diamond particles 41. For example, it is made of aluminium, and can be machined, milled or drilled as required, for example to create ventilation holes, fixing holes for the flange 19 or other fixing holes for bolts or rivets.

If the brake disc must dissipate very high heat outputs, the brake disc 1 is provided with ventilation channels extending in the brake disc, in the thickness between the two friction surfaces 15, for example extending radially or in a curved fashion.

In one embodiment (Figure 13), ventilation channels 38 are obtained by making holes in the brake disc 1, for example with a drill.

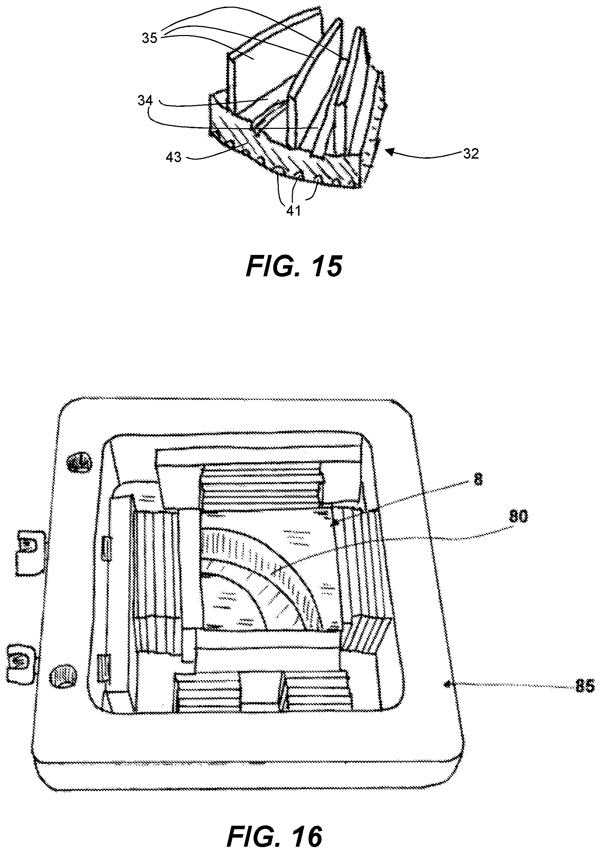

In another embodiment (Figure 14), the brake disc 1 is composed of two parts 31, 32 which are manufactured separately and assembled, for example being fixed to one another by means of bolts or rivets. Each part 31, 32 includes a respective friction surface 15 on a first face and, on a second opposite face, recesses 34 corresponding to respective portions of ventilation channels 38 (Figure 15).

When the two parts 31, 32 are assembled, the second faces are facing each other. The ventilation channels 38 are created by joining together the recesses 34 which face each other and/or are interpenetrating. In particular, each second face comprises projections or ribs 35, between which the recesses 34 are defined. When the two parts 31, 32 are assembled, the projections 35 of one part make contact against corresponding seats in the other part. The projections 35 also act as spacers which, when suitably made, maintain the parallelism between the friction surfaces 15.

In particular, the friction surfaces 15 comprise a single layer of diamond particles, as described above, whilst the rest of each part 31, 32 is made of binder material, for example aluminium.

According to this disclosure, a braking member or an element for the friction portion may be made with different methods, which have in common the fact that the friction portion, or at least its friction surface, is made using a composite material comprising diamond particles and a binder.

In one production method a sintering method is used. An example of that method is described below with specific reference to a copper/diamond composite material. A similar method is also applicable with the other binders.

A first step relates to preparing the mixture of diamond and binder powders. The copper powder is measured out in quantities that depend on the thickness of the finished part to be obtained. The diamond particles are added in quantities depending on the desired performance. The concentration of the diamond particles is measured in carats/cm³ or in volumetric fraction of the volume of the composite. For example, the diamond particles occupy a fraction of the volume of the composite material that is between 10% and 50%. In particular, that volume fraction is between 15% and 40%. Even more particularly, it is 20%.

A second step relates to homogeneous mixing of the powders. The mixture of copper powder and diamond particles is inserted in a drum and is made to rotate inside a special "Turbula" mixer for a time which may vary from several minutes to several hours depending on the particle size measurement and the quantity of product to be mixed. In particular, that time is between 15 minutes and 30 minutes.

A third step relates to granulation of the powders. The homogeneous mixture obtained from the previous step requires a further treatment, called "granulation", so that it can be evenly distributed inside a sintering mould.

Granulation is designed to transform the powders, which initially have a very fine grain (for example with diameter or size between 20 µm and 60 µm), into larger granules with a diameter or size of approximately several tenths of a millimetre. That facilitates the workability and fluidity of the material during the step of distribution in the mould. The granulation is carried out in special machines called granulators. Adhesive powders are added to the mixture, which is worked in such a way as to obtain substantially spherical granules which are then dried to make them firmer.

For the subsequent steps a sintering mould 8 made of graphite is supplied, having a matrix or cavity 80 with the shape and dimensions of the part to be obtained. The sintering mould 8 is assembled and pressed in a suitable steel mould holder 85, as illustrated in Figure 16. The use of a sintering mould 8 made of graphite is advantageous because graphite is a good conductor of electricity and has a low thermal expansion coefficient. Therefore, it is easy to transfer heat to the cavity 80 and at the same time apply pressure on the mould 8. In any case, it is possible to use a sintering mould made of steel.

A fourth step relates to cold pre-moulding. The granulated mixture is distributed in the cavity 80 of the mould 8. Before sintering, the mould 8 must be cold pressed to compact the mixture and promote sintering. That is achieved with a punch made of graphite that is shaped to allow it to slide in the cavity 80 and at the same time to prevent the mixture powder from coming out of the cavity 80.

A fifth step relates to actual sintering. The mould holder 85 with the mould 8 inside it is placed in a sintering machine, which automatically loads the mould holder 85 into a sintering chamber, where the mould 8 is pressed between two electrodes which are also made of graphite.

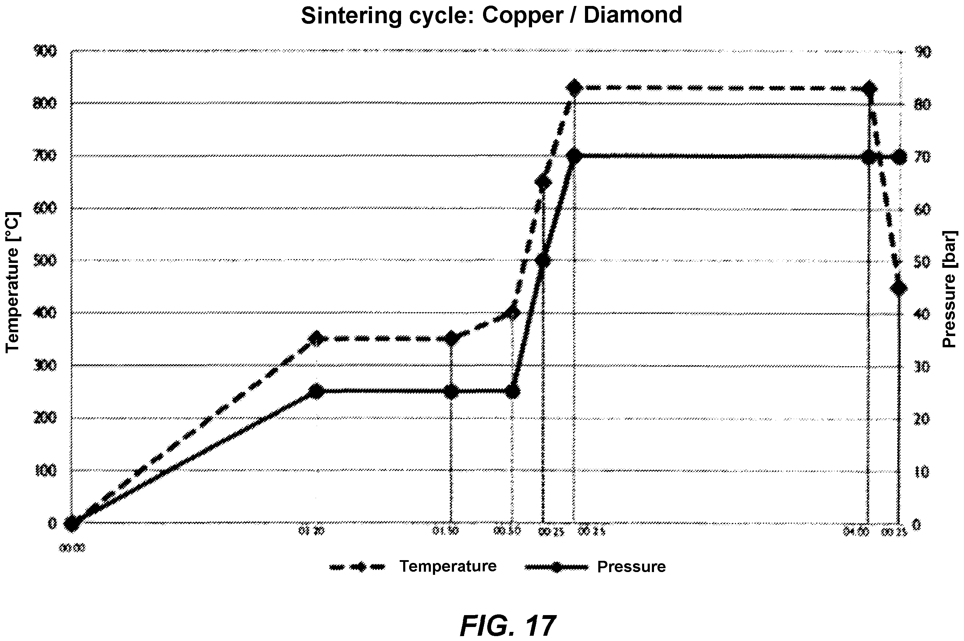

The thermal cycle and the pressures applied in the sintering machine depend on the type of powder being used and the desired result. An example of a cycle for making a copper/diamond disc is shown in Figure 17.

At the end of the sintering, the part obtained is extracted from the mould and, after suitable cleaning and sandblasting, is ready for use.

For example, the part is an element 14 of friction portion and has the shape of one quarter of a circular ring, as shown in Figure 7. Eight parts obtained in this way are mounted on a support 17, four on each face, to obtain the two circular ring-shaped friction portions 13.

To obtain a friction portion 13 in which only a surface layer is made of composite material, the granulated mixture is distributed in the cavity 80 of the mould 8 only up to a predetermined height equal to the thickness of the layer to be obtained. The rest of the cavity 80 is filled only with copper powder. The sintering produces an element which is in one piece, having a surface layer made of copper/diamond composite material and the rest made of sintered copper.

To obtain a single-grain layer of composite material, the following method can be used: spreading a layer of adhesive on the bottom of the cavity 80; distributing the granulated mixture (or even just diamond particles) in the cavity 80; turning over the mould 8, so as to empty the cavity 80 and only leave a layer of granules or particles which is glued to the bottom of the cavity 80; filling the rest of the cavity 80 only with copper powder. Sintering is carried out as described above.

Alternatively to the above, the part may be sintered or die-cast in a metal mould, if necessary using techniques known in the sector of MMC component production.

In an alternative embodiment a three-dimensional (3D) printing method is used, for example direct metal laser sintering, with the acronym DMLS. In practice, the sintering energy is supplied with a laser beam. This technique, although known as a 3D printing technique, has never before been used for a metal/diamond MMC.

In another alternative embodiment, a different three-dimensional printing method is used, for example Electron Beam Melting.

Another method for making a braking member with a single-grain surface layer of composite material is described below.

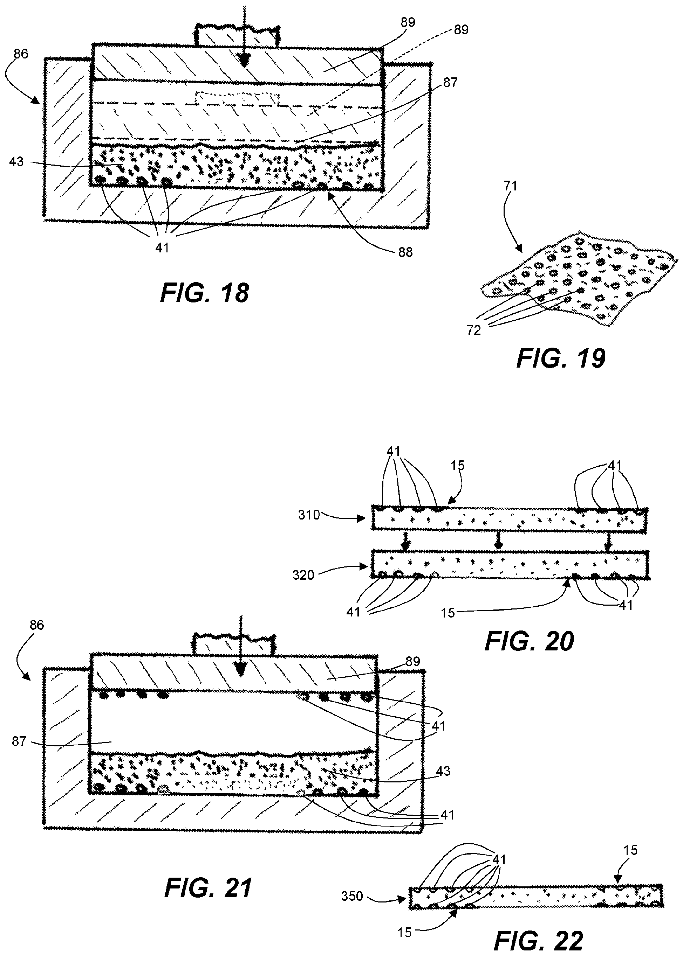

An adhesive layer is positioned on a face of a chamber 87 of a sintering mould 86 (shown in a simplified way in Figure 18), in particular on a bottom face 88. For example, the adhesive layer is a heat-soluble material, which dissolves during sintering.

The adhesive layer is positioned only where diamond particles 41 are required in the braking member to be obtained. For example, the adhesive layer is in the shape of a ring, corresponding to the shape of the friction surface 15 of Figure 9.

Diamond particles 41 are distributed on the adhesive layer. Some diamond particles 41 adhere to the adhesive layer and therefore are constrained to the face 88, whilst the remaining diamond particles are free, that is to say, they are not fixed to the layer of adhesive. After the free particles 41 have been removed (for example by suction or by turning over the mould), a single layer of diamond particles 41 remains in the mould 86.

The powder of binder 43 is added in the chamber 87 of the mould, filling the spaces between the diamond particles 41 on the adhesive layer and forming a top layer in which there is only the binder. A punch 89 descends in the chamber 87 and compresses the contents (that is to say, the powder of binder 43 and the diamond particles 41 below it) in the mould 86 during sintering. Figure 18 shows a punch 89 in the raised position and, with dashed lines, a punch 89 in the lowered position ready to start compressing the contents of the chamber 87.

Sintering is carried out, for example, in a sintering chamber.

After sintering, a part 310, 320 is obtained which has a surface made of diamond and binder composite material, in which the diamond particles 41 are positioned in a single layer on a friction surface 15, whilst the rest of the part 310, 320 is made of binder material.

Holes, through holes (for example a central hole in the brake disc), grooves or similar cavities may be made with suitable shaping of the chamber 87 or by placing in it elements shaped to match the desired cavities, in such a way that the powder of binder 43 does not occupy the corresponding zones.

To obtain a single layer with diamond particles positioned according to a regular grid, the diamond particles are distributed on the layer of adhesive using a screen or template 71 (shown by way of example in Figure 19) with through openings 72 positioned according to the self-same regular grid. The dimensions of the through openings 72 are slightly greater than the dimensions of the diamond particles 41.

Said template 71 is placed on the adhesive layer, then the diamond particles 41 are distributed on the template 71. Only the diamond particles 41 that pass through the through openings 72 are fixed to the adhesive layer, which means that they are positioned according to the regular grid. The excess diamond particles 41 and the template 71 are removed before adding the powder of binder 43. If necessary, the template 71 may have zones with grids that are different to one another. For example, a denser grid where the brake disc is subject to more stress during use and a less dense grid where the brake disc is less stressed.

For example, the method described above is used to obtain two pieces or parts 310, 320 (each having a respective friction surface 15 with a single layer of diamonds) which are disc-shaped and are assembled to obtain a brake disc (Figure 20). The two parts 310, 320 are joined together using bolts or rivets which pass through suitable holes made in the parts.

In an alternative embodiment, after the sintering step each part 310, 320 is subjected to a further working step. A three-dimensional printing method (or additive manufacturing) is used to make projections 35 and recesses 34 on the opposite face to that on which the diamond particles 41 are located. That gives parts 31, 32 which are assembled to obtain a brake disc with ventilation channels, as already described above.

With the sintering method described above, it is also possible to directly obtain a part 350 which has two friction surfaces 15 on opposite faces. In particular, the part 350 is disc-shaped and constitutes the body of a brake disc (Figure 22).

For this purpose, a single layer of diamond particles 41 is also created (by means of an adhesive layer) on the surface of the punch 89 which compresses the contents of the chamber 87 in the mound 86 during sintering. Closing the mould 86 also brings said particles 41 into the binder powder and they are incorporated in the corresponding face of the part 350.

For all of the methods described above, there may be a preliminary step in which the diamond particles, before being mixed with the binder powder, are coated or granulated with a coating substance so as to improve heat conduction between the diamond and the matrix of the composite material and to improve adhesion between the diamond particles and the binder. In particular, the diamond particles are coated or granulated with chromium. In place of chromium, other coating substances may be used, for example titanium, silver, nickel or copper. Moreover, as an alternative to granulation, the coating of the diamond particles with the coating substance is carried out with a chemical vapour deposition (CVD) method or with a physical vapour deposition (PVD) method.

The subject matter of this disclosure is described above with reference to some embodiments thereof. It shall be understood that there may be other embodiments relating to the same inventive concept, all protected by the appended claims.

## Claims

1. A braking member (1, 2) for a brake system (9), said braking member (1, 2) comprising at least one friction portion (13, 23) having a surface (15, 25) intended to be put into contact with a component (2, 1) of the brake system (9) to produce a braking action due to a friction force between said surface (15, 25) and said component (2, 1),
**characterised in that** the surface (15, 25) and/or the friction portion (13, 23) is made of a composite material comprising diamond particles (41) and a binder (43).

2. The braking member (1, 2) according to claim 1, wherein the composite material comprises a matrix of binder (43) and diamond particles (41) embedded in the matrix of binder (43).

3. The braking member (1, 2) according to claim 1 or 2, wherein the binder (43) is a metal material, in particular the binder (43) is a material selected from a group comprising: aluminium, copper, titanium, magnesium, cobalt, iron, cast iron, steel, an alloy or two or more of these materials.

4. The braking member (1, 2) according to any one of claims 1 to 3, wherein said composite material comprises the binder (43) and a single layer, or single-grain layer, of diamond particles (41), said composite material forming a surface layer which forms the surface (15, 25) of the friction portion (13, 23).

5. The braking member (1, 2) according to claim 4, the diamond particles (41) of said single layer being positioned according to a regular grid wherein the diamond particles (41) are spaced from one another and the binder (43) is interposed between the diamond particles (41).

6. The braking member (1, 2) according to claim 4 or 5, wherein the diamond particles (41) occupy a fraction of the surface (15, 25) that is between 20% and 80%, in particular the fraction of the surface is between 40% and 60%.

7. The braking member (1, 2) according to any one of claims 4 to 6, wherein the diamond particles (41) have a diameter or a size that is between 200 µm and 1200 µm, in particular the diameter or size is between 400 µm and 800 µm.

8. The braking member (1, 2) according to any one of claims 1 to 3, wherein the friction portion (13, 23) is made entirely of said composite material.

9. The braking member (1, 2) according to claim 8, wherein the diamond particles (41) have a diameter or a size that is between 1 nm and 1 mm, in particular the diameter or size is between 10 µm and 600 µm, even more in particular the diameter or size is between 30 µm and 300 µm.

10. The braking member (1, 2) according to claim 8 or 9, wherein the diamond particles (41) occupy a fraction of the volume of the composite material that is between 10% and 50%, in particular said fraction of the volume is between 15% and 40%, even more in particular said fraction of the volume is 20%.

11. The braking member (2) according to any one of claims 1 to 10, said braking member (2) being a brake pad.

12. The braking member (1) according to any one of claims 1 to 10, said braking member (1) being a brake disc.

13. The braking member (1) according to claim 12, wherein the friction portion (13) is circular ring-shaped, the friction portion (13) being composed of one or more elements (14) made of said composite material or with a surface made of said composite material, the brake disc (1) further comprising a support (17) that is disc-shaped, said one or more elements (14) being mounted on the support (17) to form the circular ring-shaped friction portion (13).

14. The braking member (1) according to claim 13, comprising two circular ring-shaped friction portions (13) that are on opposite faces of the disc-shaped support (17), each friction portion (13) being composed of one or more elements (14) made of said composite material or with a surface made of said composite material, the disc-shaped support (17) being at least partly enclosed between two of said elements (14).

15. The braking member (1) according to any one of claims 4 to 7, said braking member (1) being a brake disc comprising two circular ring-shaped surfaces (15) that are on opposite faces of the braking member (1), said two surfaces (15) being made of said composite material comprising a single layer of diamond particles (41).

16. The braking member (1) according to claim 15, comprising ventilation channels (38) extending in the body of the braking member (1), the body being between the two surfaces (15), the braking member (1) being composed of two parts (31, 32) which are assembled, each of said two parts (31, 32) comprising one of said two surfaces (15) and, on an opposite face, recesses (34) corresponding to respective portions of the ventilation channels (38).

17. A brake system (9) comprising at least one braking member (1, 2) according to any one of claims 1 to 16.

18. The brake system (9) according to claim 17, comprising at least one brake disc (1) and a brake pad (2) intended to operate in conjunction with the brake disc (1) to produce a braking action, the brake pad (2) being according to claim 11 and the brake disc (1) being according to any one of claims 12 to 16.

19. A method for making a braking member (1, 2) for a brake system (9), said braking member (1, 2) comprising at least one friction portion (13, 23) having a surface (15, 25) intended to be put into contact with a component (2, 1) of the brake system (9) to produce a braking action due to a friction force between said surface (15, 25) and said component (2, 1),
**characterised in that** the method for making the braking member comprises a step of making the friction portion (13, 23) or at least said surface (15, 25) using a composite material comprising diamond particles (41) and a binder (43).

20. The method according to claim 19, wherein the step of making the friction portion (13, 23) comprises the sub-steps of:
- placing a layer of adhesive on a face (88) of a chamber (87) of a mould (86);
- distributing diamond particles (41) on the layer of adhesive;
- removing from the mould (86) those diamond particles (41) which are not fixed to the layer of adhesive;
- adding powder of binder (43) in the chamber (87) of the mould (86);
- sintering the contents of the chamber (87) of the mould (86), obtaining a friction portion (13, 23) having a surface (15; 25) made of a composite material comprising the binder (43) and a single layer, or single-grain layer, of diamond particles (41).

21. The method according to claim 20, wherein the sub-step of distributing diamond particles (41) on the layer of adhesive is carried out using a screen or a template (71) with a regular grid of through openings (72), through which the diamond particles (41) fixed to the adhesive layer are positioned according to a regular grid in which the diamond particles (41) are spaced from one another.

22. The method according to claim 20 or 21, comprising a further step of making projections (35) and recesses (34) on a face of the sintered friction portion (13, 23), said face being opposite said surface (15) made of composite material, wherein said projections (35) and recesses (34) are made by means of a three-dimensional printing method.

23. The method according to claim 19, wherein the friction portion (13, 23) is made by means of a sintering method.

24. The method according to claim 19, wherein the friction portion (13, 23) is made by means of a three-dimensional printing method.

25. The method according to claim 24, wherein the three-dimensional printing method is a direct metal laser sintering method.

26. The method according to any one of claims 19 to 25, comprising a step of coating or granulating the diamond particles (41) with a coating substance before mixing the diamond particles (41) and the binder (43), in particular said coating substance being selected from a group comprising: chromium, titanium, silver, nickel, copper.

## Patentansprüche

1. Ein Bremskörper (1, 2) für ein Bremssystem (9), wobei besagter Bremskörper (1, 2) mindestens einen Reibungsteil (13, 23), welcher eine Oberfläche (15, 25) hat, die dazu vorgesehen ist, mit einer Komponente (2, 1) des Bremssystems in Kontakt gebracht zu werden, um eine Bremswirkung aufgrund einer Reibungskraft zwischen besagter Oberfläche (15, 25) und besagter Komponente (2, 1) hervorzurufen, umfasst,
**gekennzeichnet dadurch, dass** die Oberfläche (15, 25) und/oder der Reibungsteil (13, 23) aus einem Verbundwerkstoff hergestellt ist, welcher Diamantpartikel (41) und ein Bindemittel (43) umfasst.

2. Der Bremskörper (1, 2) nach dem Patentanspruch 1, wobei der Verbundwerkstoff eine Matrix aus Bindemittel (43) und Diamantpartikeln (41), die in die Matrix aus Bindemittel (43) eingebettet sind, umfasst.

3. Der Bremskörper (1, 2) nach den Patentansprüchen 1 oder 2, wobei das Bindemittel (43) ein Metallmaterial ist, im Besonderen ist das Bindemittel (43) ein Material, das aus einer Gruppe gewählt wird, die Folgendes umfasst: Aluminium, Kupfer, Titan, Magnesium, Kobalt, Eisen, Gusseisen, Stahl, eine Legierung aus zwei oder mehr dieser Materialien.

4. Der Bremskörper (1, 2) nach jedem der Patentansprüche 1 bis 3, wobei besagter Verbundwerkstoff das Bindemittel (43) und eine einzelne Schicht, oder eine Einzelkornschicht, aus Diamantpartikeln (41) umfasst, besagter Verbundwerkstoff bildet dabei eine Oberflächenschicht, welche die Oberfläche (15, 25) des Reibungsteils (13, 23) bildet.

5. Der Bremskörper (1, 2) nach dem Patentanspruch 4, wobei die Diamantpartikel (41) der besagten einzelnen Schicht in einem gleichmäßigen Raster positioniert sind, in dem die Diamantpartikel (41) in einem gewissen Abstand voneinander sind und das Bindemittel (43) zwischen den Diamantpartikeln (41) eingefügt ist.

6. Der Bremskörper (1, 2) nach den Patentansprüchen 4 oder 5, wobei die Diamantpartikel (41) einen Bruchteil der Oberfläche (15, 25) bedecken, der zwischen 20 % und 80 % liegt, im Besonderen liegt der Bruchteil der Oberfläche zwischen 40 % und 60 %.

7. Der Bremskörper (1, 2) nach jedem der Patentansprüche 4 bis 6, wobei die Diamantpartikel (41) einen Durchmesser oder eine Größe haben, die zwischen 200 µm und 1200 µm liegt, im Besonderen liegt der Durchmesser oder die Größe zwischen 400 µm und 800 µm.

8. Der Bremskörper (1, 2) nach jedem der Patentansprüche 1 bis 3, wobei der Reibungsteil (13, 23) vollständig aus besagtem Verbundwerkstoff besteht.

9. Der Bremskörper (1, 2) nach dem Patentanspruch 8, wobei die Diamantpartikel (41) einen Durchmesser oder eine Größe haben, die zwischen 1 nm und 1 mm liegt, im Besonderen liegt der Durchmesser oder die Größe zwischen 10 µm und 600 µm, noch genauer liegt der Durchmesser oder die Größe zwischen 30 µm und 300 µm.

10. Der Bremskörper (1, 2) nach den Patentansprüchen 8 oder 9, wobei die Diamantpartikel (41) einen Bruchteil des Volumens des Verbundwerkstoffs bedecken, der zwischen 10% und 50 % liegt, im Besonderen liegt besagter Bruchteil des Volumens zwischen 15 % und 40 %, noch genauer ist besagter Bruchteil des Volumens 20 %.

11. Der Bremskörper (1, 2) nach jedem der Patentansprüche 1 bis 10, wobei besagter Bremskörper (2) ein Bremsbelag ist.

12. Der Bremskörper (1, 2) nach jedem der Patentansprüche 1 bis 10, wobei besagter Bremskörper (1) eine Bremsscheibe ist.

13. Der Bremskörper (1, 2) nach dem Patentanspruch 12, wobei der Reibungsteil (13) wie ein runder Ring geformt ist, dabei besteht der Reibungsteil (13) aus einem oder mehr Elementen (14), welche aus besagtem Verbundwerkstoff bestehen oder mit einer Oberfläche aus besagtem Verbundwerkstoff, die Bremsscheibe (1) umfasst dabei außerdem einen Träger (17), der scheibenförmig ist, besagtes ein oder mehr Elemente (14) sind dabei am Träger (17) montiert, um den wie ein runder Ring geformten Reibungsteil (13) zu bilden.

14. Der Bremskörper (1, 2) nach dem Patentanspruch 13, zwei wie ein runder Ring geformte Reibungsteile (13) umfassend, die sich an gegenüberliegenden Seiten des scheibenförmigen Trägers (17) befinden, jeder Reibungsteil (13) aus einem oder mehr Elementen (14) bestehend, welche aus besagtem Verbundwerkstoff bestehen oder mit einer Oberfläche aus besagtem Verbundwerkstoff, der scheibenförmige Träger (17) ist dabei zumindest teilweise zwischen zwei der besagten Elemente (14) eingeschlossen.

15. Der Bremskörper (1, 2) nach jedem der Patentansprüche 4 bis 7, wobei besagter Bremskörper (1) eine Bremsscheibe ist, welche zwei runde, ringförmige Oberflächen (15) umfasst, die sich an gegenüberliegenden Seiten des Bremskörpers (1) befinden, besagte zwei Oberflächen (15) bestehen dabei aus besagtem Verbundwerkstoff, eine einzelne Schicht aus Diamantpartikeln (41) umfassend.

16. Der Bremskörper (1, 2) nach dem Patentanspruch 15, Lüftungskanäle (38) umfassend, die sich im Körper des Bremskörpers (1) erstrecken, der Körper befindet sich dabei zwischen den zwei Oberflächen (15), der Bremskörper (1) besteht dabei aus zwei Teilen (31, 32), die zusammengebaut sind, jeder der zwei Teile (31, 32) umfasst dabei eine der besagten zwei Oberflächen (15) und, auf einer gegenüberliegenden Seite, Aussparungen (15), welche jeweiligen Teilen der Lüftungskanäle (38) entsprechen.

17. Ein Bremssystem (9), mindestens einen Bremskörper (1, 2) nach jedem der Patentansprüche 1 bis 16 umfassend.

18. Das Bremssystem (9) nach dem Patentanspruch 17, mindestens eine Bremsscheibe (1) und einen Bremsbelag (2) umfassend, vorgesehen dafür, im Zusammenspiel mit der Bremsscheibe (1) zu funktionieren, um eine Bremswirkung hervorzurufen, der Bremsbelag (2) ist dabei wie im Patentanspruch 11 und die Bremsscheibe (1) ist dabei wie in jedem der Patentansprüche 12 bis 16.

19. Ein Verfahren zur Herstellung eines Bremskörpers (1, 2) für ein Bremssystem (9), wobei besagter Bremskörper (1, 2) mindestens einen Reibungsteil (13, 23) umfasst, welcher eine Oberfläche (15, 25) hat, die dazu vorgesehen ist, mit einer Komponente (2, 1) des Bremssystems (9) in Kontakt gebracht zu werden, um eine Bremswirkung aufgrund einer Reibungskraft zwischen besagter Oberfläche (15, 25) und besagter Komponente (2, 1) hervorzurufen,
**gekennzeichnet dadurch, dass** das Verfahren zur Herstellung des Bremskörpers einen Schritt der Herstellung des Reibungsteils (13, 23) oder zumindest besagter Oberfläche (15, 25) unter Verwendung eines Verbundwerkstoffs, welcher Diamantpartikel (41) und ein Bindemittel (43) beinhaltet, umfasst.

20. Das Verfahren nach dem Patentanspruch 19, wobei der Schritt der Herstellung des Reibungsteils (13, 23) folgende Unterschritte umfasst:
- eine Schicht Kleber auf eine Seite (88) einer Kammer (87) einer Form (86) aufzutragen;
- Diamantpartikel (41) auf der Kleberschicht zu verteilen;
- solche Diamantpartikel (41), die nicht fest an der Kleberschicht haften, aus der Form (86) zu entfernen;
- Pulver eines Bindemittels (43) in die Kammer (87) der Form (86) hinzuzufügen;
- den Inhalt der Kammer (87) der Form (86) zu sintern und daraus einen Reibungsteil (13, 23) zu erhalten, welcher eine Oberfläche (15, 25) hat, die aus einem Verbundwerkstoff besteht, der das Bindemittel (43) und eine einzelne Schicht oder eine Einzelkornschicht aus Diamantpartikeln (41) beinhaltet.

21. Das Verfahren nach dem Patentanspruch 20, wobei der Unterschritt des Verteilens von Diamantpartikeln (41) auf der Kleberschicht ausgeführt wird, indem ein Gittersieb oder eine Schablone (71) mit einem gleichmäßigen Raster durchgehender Öffnungen (72) verwendet wird, durch welche die Diamantpartikel (41), die an der Kleberschicht haften, nach einem gleichmäßigen Raster positioniert werden, in dem die Diamantpartikel (41) in einem gewissen Abstand voneinander liegen.

22. Das Verfahren nach den Patentansprüchen 20 oder 21, einen weiteren Schritt der Herstellung von Ausbuchtungen (35) und Aussparungen (34) auf einer Seite des gesinterten Reibungsteils (13, 23) umfassend, besagte Seite liegt dabei gegenüber besagter Oberfläche (15) bestehend aus Verbundwerkstoff, wobei besagte Ausbuchtungen (35) und Aussparungen (34) mithilfe eines Verfahrens eines dreidimensionalen Drucks hergestellt werden.

23. Das Verfahren nach dem Patentanspruch 19, wobei der Reibungsteil (13, 23) mithilfe eines Sinterverfahrens hergestellt wird.

24. Das Verfahren nach dem Patentanspruch 19, wobei der Reibungsteil (13, 23) mithilfe eines Verfahrens eines dreidimensionalen Drucks hergestellt wird.

25. Das Verfahren nach dem Patentanspruch 24, wobei das Verfahren des dreidimensionalen Drucks ein Verfahren des direkten Metall-Lasersinterns ist.

26. Das Verfahren nach jedem der Patentansprüche 19 bis 25, umfassend einen Schritt des Beschichtens oder Granulierens der Diamantpartikel (41) mit einem Beschichtungsmittel, bevor die Diamantpartikel (41) und das Bindemittel (43) gemischt werden, im Einzelnen wird besagtes Beschichtungsmittel dabei aus einer Gruppe gewählt, die Folgendes umfasst: Chrom, Titan, Silber, Nickel, Kupfer.

## Revendications

1. Un organe de freinage (1, 2) pour un système de freinage (9), ledit organe de freinage (1, 2) comprenant au moins une portion de frottement (13, 23) ayant une surface (15, 25) destinée à être mise en contact avec un organe (2, 1) du système de freinage (9) pour produire une action de freinage due à une force de frottement entre ladite surface (15, 25) et ledit organe (2, 1),
**caractérisé en ce que** la surface (15, 25) et/ou la portion de frottement (13, 23) est réalisée dans un matériau composite comprenant des particules de diamant (41) et un liant (43).

2. L'organe de freinage (1, 2) selon la revendication 1, dans lequel le matériau composite comprend une matrice de liant (43) et des particules de diamant (41) noyées dans la matrice de liant (43).

3. L'organe de freinage (1, 2) selon la revendication 1 ou 2, dans lequel le liant (43) est un matériau métallique, en particulier le liant (43) est un matériau choisi dans un groupe comprenant : aluminium, cuivre, titane, magnésium, cobalt, fer, fonte, acier, un alliage ou deux ou plus de ces matériaux.

4. L'organe de freinage (1, 2) selon l'une quelconque des revendications de 1 à 3, dans lequel ledit matériau composite comprend le liant (43) et une couche simple, ou couche monogranulaire, de particules de diamant (41), ledit matériau composite formant une couche superficielle qui forme la surface (15, 25) de la portion de frottement (13, 23).

5. L'organe de freinage (1, 2) selon la revendication 4, les particules de diamant (41) de ladite couche simple étant positionnées selon une grille régulière où les particules de diamant (41) sont espacées les unes des autres et le liant (43) est interposé entre les particules de diamant (41).

6. L'organe de freinage (1, 2) selon la revendication 4 ou 5, dans lequel les particules de diamant (41) occupent une fraction de la surface (15, 25) qui est comprise entre 20 % et 80 %, en particulier la fraction de la surface est comprise entre 40 % et 60 %.

7. L'organe de freinage (1, 2) selon l'une quelconque des revendications de 4 à 6, dans lequel les particules de diamant (41) ont un diamètre ou une taille qui est compris entre 200 µm et 1 200 µm, en particulier le diamètre ou taille est compris entre 400 µm et 800 µm.

8. L'organe de freinage (1, 2) selon l'une quelconque des revendications de 1 à 3, dans lequel la portion de frottement (13, 23) est entièrement réalisée dans ledit matériau composite.

9. L'organe de freinage (1, 2) selon la revendication 8, dans lequel les particules de diamant (41) ont un diamètre ou une taille qui est compris entre 1 nm et 1 mm, en particulier le diamètre ou taille est compris entre 10 µm et 600 µm, encore plus en particulier le diamètre ou taille est compris entre 30 µm et 300 µm.

10. L'organe de freinage (1, 2) selon la revendication 8 ou 9, dans lequel les particules de diamant (41) occupent une fraction du volume du matériau composite qui est comprise entre 10 % et 50 %, en particulier ladite fraction du volume est comprise entre 15 % et 40 %, encore plus en particulier ladite fraction du volume est égale à 20 %.

11. L'organe de freinage (2) selon l'une quelconque des revendications de 1 à 10, ledit organe de freinage (2) étant une plaquette de frein.

12. L'organe de freinage (1) selon l'une quelconque des revendications de 1 à 10, ledit organe de freinage (1) étant un disque de frein.

13. L'organe de freinage (1) selon la revendication 12, dans lequel la portion de frottement (13) a la forme d'un anneau circulaire, la portion de frottement (13) étant composée d'un ou plusieurs éléments (14) réalisés dans ledit matériau composite ou avec une surface réalisée dans ledit matériau composite, le disque de frein (1) comprenant en outre un support (17) qui a la forme d'un disque, lesdits un ou plusieurs éléments (14) étant montés sur le support (17) pour former la portion de frottement (13) en forme d'anneau circulaire.

14. L'organe de freinage (1) selon la revendication 13, comprenant deux portions de frottement (13) en forme d'anneau circulaire qui sont sur des faces opposées du support (17) en forme de disque, chaque portion de frottement (13) étant composée d'un ou plusieurs éléments (14) réalisés dans ledit matériau composite ou avec une surface réalisée dans ledit matériau composite, le support (17) en forme de disque étant au moins partiellement enfermé entre deux desdits éléments (14).

15. L'organe de freinage (1) selon l'une quelconque des revendications de 4 à 7, ledit organe de freinage (1) étant un disque de frein comprenant deux surfaces (15) en forme d'anneau circulaire qui sont sur des faces opposées de l'organe de freinage (1), lesdites deux surfaces (15) étant réalisées dans ledit matériau composite comprenant une couche simple de particules de diamant (41).

16. L'organe de freinage (1) selon la revendication 15, comprenant des canaux de ventilation (38) s'étendant dans le corps de l'organe de freinage (1), ledit corps étant situé entre les deux surfaces (15), l'organe de freinage (1) étant composé de deux parties (31, 32) qui sont assemblées, chacune desdites deux parties (31, 32) comprenant une desdites deux surfaces (15) et, sur une face opposée, des renfoncements (34) correspondant à des portions respectives des canaux de ventilation (38).

17. Un système de freinage (9) comprenant au moins un organe de freinage (1, 2) selon l'une quelconque des revendications de 1 à 16.

18. Le système de freinage (9) selon la revendication 17, comprenant au moins un disque de frein (1) et une plaquette de frein (2) destinée à coopérer avec le disque de frein (1) pour produire une action de freinage, la plaquette de frein (2) étant selon la revendication 11 et le disque de frein (1) étant selon l'une quelconque des revendications de 12 à 16.

19. Un procédé de fabrication d'un organe de freinage (1, 2) pour un système de freinage (9), ledit organe de freinage (1, 2) comprenant au moins une portion de frottement (13, 23) ayant une surface (15, 25) destinée à être mise en contact avec un organe (2, 1) du système de freinage (9) pour produire une action de freinage due à une force de frottement entre ladite surface (15, 25) et ledit organe (2, 1),
**caractérisé en ce que** le procédé de fabrication de l'organe de freinage comprend une phase de réalisation de la portion de frottement (13, 23) ou au moins de ladite surface (15, 25) en utilisant un matériau composite comprenant des particules de diamant (41) et un liant (43).

20. Le procédé selon la revendication 19, dans lequel la phase de réalisation de la portion de frottement (13, 23) comprend les sous-phases consistant à :
- placer une couche d'adhésif sur une face (88) d'une chambre (87) d'un moule (86) ;
- distribuer des particules de diamant (41) sur la couche d'adhésif ;
- enlever du moule (86) les particules de diamant (41) qui ne sont pas fixées à la couche d'adhésif ;
- ajouter de la poudre de liant (43) dans la chambre (87) du moule (86) ;
- fritter le contenu de la chambre (87) du moule (86), obtenant une portion de frottement (13, 23) ayant une surface (15 ; 25) réalisée dans un matériau composite comprenant le liant (43) et une couche simple, ou couche monogranulaire, de particules de diamant (41).

21. Le procédé selon la revendication 20, dans lequel la sous-phase consistant à distribuer les particules de diamant (41) sur la couche d'adhésif est effectuée en utilisant un crible ou un gabarit (71) avec une grille régulière d'ouvertures débouchantes (72), à travers lesquelles les particules de diamant (41) fixées à la couche d'adhésif sont positionnées selon une grille régulière dans laquelle les particules de diamant (41) sont espacées les unes des autres.

22. Le procédé selon la revendication 20 ou 21, comprenant une autre phase consistant à réaliser des saillies (35) et des renfoncements (34) sur une face de la portion de frottement (13, 23) frittée, ladite face étant opposée à ladite surface (15) réalisée en matériau composite, dans lequel lesdites saillies (35) et lesdits renfoncements (34) sont réalisés selon un procédé d'impression tridimensionnelle.

23. Le procédé selon la revendication 19, dans lequel la portion de frottement (13, 23) est réalisée selon un procédé de frittage.

24. Le procédé selon la revendication 19, dans lequel la portion de frottement (13, 23) est réalisée selon un procédé d'impression tridimensionnelle.

25. Le procédé selon la revendication 24, dans lequel le procédé d'impression tridimensionnelle est un procédé de frittage métallique direct par laser.

26. Le procédé selon l'une quelconque des revendications de 19 à 25, comprenant une phase consistant à revêtir ou à granuler les particules de diamant (41) avec une substance de revêtement avant de mélanger les particules de diamant (41) et le liant (43), en particulier ladite substance de revêtement étant choisie dans un groupe comprenant : chrome, titane, argent, nickel, cuivre.
